# EUROPEAN PATENT APPLICATION

(11) **EP 4 509 234 A1**
(43) Date of publication of application: **19.02.2025**
(21) Application number: 23275118.0
(22) Date of filing: 15.08.2023
(51) Int. Cl.: B08B 15/02, B08B 15/04, B24B 55/06, B23D 59/00, B23Q 11/00

(54) **EXTRACTION HOOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

There is provided an extraction hood (200) for aiding ventilation, the extraction hood comprising: a receiving hood section (202) defining a receiving hood inlet (204) for receiving one or more particulates; and a capture hood section (206) defining one or more capture hood inlets (208) for receiving airborne dust, wherein the area of the receiving hood inlet (204) is larger compared with a total area of the one or more capture hood inlets (208).

## Description

### FIELD

The present disclosure relates to an extraction hood for aiding ventilation in an area. In particular the disclosure is concerned with a removing particulates and residual airborne particulates from an area.

### BACKGROUND

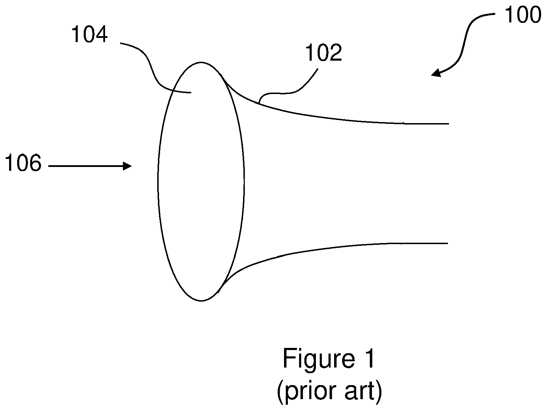

Figure 1 shows an example of a known receiving hood 100. Receiving hoods are typically used areas in which particulates may be produced, such as workshops and laboratories. For example, in a workshop in which an operator may be performing grinding, cutting or sawing or materials, such as glass reinforced plastic, it is likely that particulates would be produced by this action. A receiving hood is configured to receive the particulates that are aimed at it and vent these particulates away to provide a safer environment for the operator.

The receiving hood 100 includes a receiving hood wall 102 that defines an opening 104. In use, the opening 104 of the receiving hood 102 is pointed towards the source of particulates (e.g. the cutting operation), such that the particulates are received in the receiving hood 100 in use. However, receiving hoods 100 are not very effective at capturing residual airborne particulates (e.g., dust) from the surrounding air as the size of the receiving hood opening is typically too large, such that the flow speed of residual airborne particulates into the receiving hood would not be sufficient.

In many repair operations, such as during laminating repairs on GRP vessels, a large quantity of residual airborne particulates is created. The current hoods available as described above may potentially remove residual airborne particulates, which is directed into it, but this type of hood does not have the performance to remove much residual airborne particulates which accumulates during the process.

It is the object of the present invention to overcome at least some of the above-mentioned problems.

### SUMMARY

According to the present disclosure there is provided an apparatus as set forth in the appended claims. Other features of the invention will be apparent from the dependent claims, and the description which follows.

Accordingly there may be provided an extraction hood for aiding ventilation, the extraction hood comprising: a receiving hood section defining a receiving hood inlet for receiving one or more particulates; and a capture hood section defining one or more capture hood inlets for receiving residual airborne particulates, wherein a receiving hood inlet area is larger compared with a total area of the one or more capture hood inlets.

The extraction hood described aids with ventilation of both particulates that are directed at the extraction hood and residual airborne particulates. As such, the extraction hood provides a more effective ventilation system when compared with a receiving hood as described above in relation to Figure 1.

In one example, the receiving hood section extends through capture hood section. This arrangement leads to an efficient use of space. The presence of the receiving hood section within the capture hood section means that separate structures are not required and the capture hood section and receiving hood sections may share a common boundary.

In one example, the inlet of the receiving hood section protrudes beyond the one or more capture hood inlets of the capture hood section, such that the receiving hood section extends through and out of the capture hood section. This allows for the majority of particulates aimed at the receiving inlet to be captured but any particulates missed by the receiving hood inlet has a secondary opportunity to be captured via the capture hood inlets set further back.

In one example, the receiving hood section comprises a continuous receiving hood wall that defines the receiving hood inlet. Providing a continuous wall is an efficient use of material and space. It further assists with the capture hood being arranged at least partly around it.

In one example, the receiving hood wall has a substantially square profile. This is beneficial within the context of the extraction hood because it is suited for capturing particulates as well as linking well with the context of having one or more smaller capture hood openings.

In one example, the capture hood section comprises a capture hood wall located at least partly around a periphery of the receiving hood section, wherein the one or more capture hood inlets are defined between the receiving hood wall and the capture hood wall. In this example, the one or more capture hood inlets may be in the form of one or more minor segments of a circle. In other words, they are shaped such that there is a chord extending between two points on the circumference of a circle. This arrangement provides an efficient use of space as the receiving hood wall acts as boundary to both the receiving hood section and the capture hood section.

In one example, the capture hood wall has a lip at the one or more capture hood inlets to increase the total area of the one or more capture hood inlets. The lip defines an angle of the capture hood wall such that there is a slightly increased opening size for the capture hood section in this area.

In one example, the capture hood section has a substantially circular profile. By circular profile, it is intended to mean both a complete substantially circular profile around the outside of the receiving hood section and an interrupted circular profile which includes a plurality of minor segments of a circle. That is to say that the capture hood section may be formed of four minor segments of a circle arranged on a periphery of the receiving hood wall. In some cases, the capture hood section is formed of four minor segments of an ellipse arranged on a periphery of the receiving hood wall. Providing a substantially circular profile provides a different in relative shape between the receiving hood section and capture hood section.

In one example, the total inlet area of the one or more capture hood inlets may be varied by adjusting a position of the capture hood wall relative to the position of the receiving hood wall. This would allow a user to partially control the relative flow into the receiving hood section and the capture hood section.

In one example, the one or more capture hood inlets comprises a plurality of capture hood inlets arranged around a periphery of the receiving hood section. This can allow for up to 360 degree capture hood section around a receiving hood section. The capture hood inlets may be positioned dependant on the activity and where the residual airborne particulates are deemed most abundant.

In one example, the capture hood section and the receiving hood section each have outlets that feed into a common channel. Providing a common channel downstream means that a common inlet system may be utilised to draw particulates and residual airborne particulates into the extraction hood.

In one example, an outlet area of the receiving hood section is smaller than the inlet area of the receiving hood section. In other words, the receiving hood wall may taper inwards between the inlet and outlet of the receiving hood section. This tapering enables the size of the receiving hood to be relatively large to capture particulates whilst also enabling good airflow within the receiving hood section.

In one example, the outlet area of the capture hood section is substantially similar to the total inlet area of the capture hood section. Providing a similar area of inlet and outlet means that the speed of airflow within the capture hood section would be relatively consistent. This also assists with providing a relative high velocity of airflow (including residual airborne particulates) into the inlet of the capture hood section.

The material of the extraction hood may be designed to suit the activity and environment. For example, in some environments, plastic composites and/or metals are suitable. Additives may be used to make them fire retardant and/or anti-static. Extraction hoods used in hotwork environments are substantially formed of metal.

In one example, the ratio of receiving hood inlet area to the total area of the one or more capture hood inlets is between 3:1 and 10:1. More preferably, the ratio is between 5:1 and 8:1, more preferably the ratio is between 6:1 and 7:1. The ratio described above provides a suitable arrangement such that the airspeed into the receiving hood section is different to the airspeed into the capture hood section.

In one example, the ratio of receiving hood outlet area to the total area of the one or more capture hood outlets is between 1:1 and 2:1.

The extraction hood described above has great potential within any process which produces particulates and residual airborne particulates, from joinery shops to flour mills. Maximising an extraction system to extract residual airborne particulates) as well as particulates directed at the extraction hood allows for a safer working environment and a reduction in costs to install and operate.

### BRIEF DESCRIPTION OF THE FIGURES

Embodiments of the invention will now be described by way of example only with reference to the figures, in which:
Figure 1 shows an example of a receiving hood according to the prior art;
Figure 2 shows a perspective view of example of an extraction hood;
Figure 3 shows an end view of example of an extraction hood;
Figure 4 shows a cross sectional view of example of an extraction hood; and
Figure 5 shows an example of airflow into the extraction hood.

### DETAILED DESCRIPTION

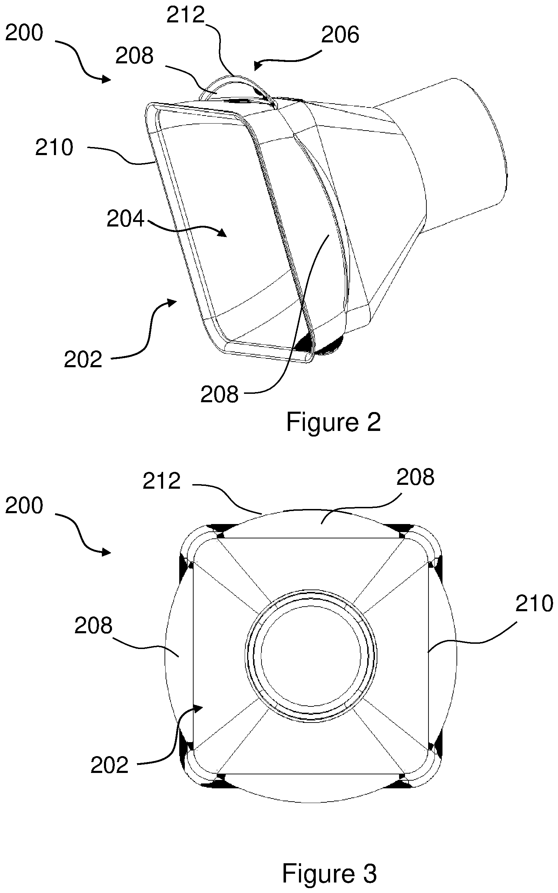

The present disclosure relates to an extraction hood 200, as shown in Figures 2, 3 and 4, which show a perspective view, end view and a cross-sectional view of example of an extraction hood 200 respectively. The extraction hood 200 is for aiding ventilation in an area. For example, the extraction hood 200 is suitable for use in a workshop or other location in which typical workshop work, such as cutting, drilling, sawing, grinding or other such operations that may generate particulates and residual airborne particulates. The extraction hood 200 may also be suitable for use in a laboratory or the like.

In this specification, the term particulates is used to refer to solid pieces of material that may be generated as a result of the user operation. For example, splinters, or pieces of material that may fly off during a cutting operation. Particulates may also comprise solid or liquid material that is suspended in air. Particulates may be synonymous with contaminants.

Residual airborne particulates is used to refer to the airborne particulates that may be generated as a result of the user operation that results in solid or liquid material (e.g. dust) that may be present in the air in the surrounding environment. The residual airborne particulates are not directed at the receiving hood in operation.

The extraction hood 200 is configured to aid ventilation in the environment. That is to say that the extraction hood is suitable for reducing (not necessarily in totality) the amount of particulates and residual airborne particulates within an environment, such as a workshop/laboratory or the like in which a user is working.

The extraction hood includes a receiving hood section 202. The receiving hood section 202 is configured to perform a similar operation to the receiving hood shown in figure 1. In other words, the receiving hood section 202 is configured to be directed towards a possible source of particulates (e.g. towards the material that is being cut/grinded etc.), such that particulates generated from the material (e.g. cuttings/dust etc.) that are directed towards the receiving hood section 202 are configured to be received in the receiving hood section 202. The receiving hood section 202 includes a receiving hood inlet 204 into which the particulates may be received.

As shown in figure 1, the extraction hood includes a capture hood section 206. The capture hood section 206 is suitable for receiving residual airborne particulates from the air. In other words, the capture hood section 206 may be designed to draw in air from the environment and pass this air through a filter system to reduce the amount of dust particles from the air and return the "cleaned" air to the local environment. Alternatively, the capture hood section 206 may simply be designed to draw in air and a fresh source of air may come from another location (e.g. through an open window).

The capture hood section 206 defines one or more capture hood inlets 208 for receiving residual airborne particulates. As will be described below, in practice the capture hood section 206 may also receive some particulates and the receiving hood section 202 may receive some residual airborne particulates, but the receiving hood section 202 is more effective at receiving the particulates due to the relatively larger area of the inlet and the capture hood section 206 is more effective at receiving the residual airborne particulates due to the relatively smaller total area of inlet(s), which results in a faster airflow into the capture hood section 206 relative to the receiving hood section 202. In other words, the velocity of the air flowing into the capture hood section 206 is greater than the velocity of air flowing into the receiving hood section 202 and so it is more suitable for receiving residual airborne particulates in the area.

As shown in Figure 2, the receiving hood section 202 may extend through the capture hood section 206. That is to say that the capture hood section 206 may at least partly surround the receiving hood section 202. That is to say that there is a first airflow path defined by the receiving hood section 202 and a second airflow path defined by the capture hood section 206. The receiving hood section 202 and the capture hood section 206 may feed into a common channel, such as an extraction hose. The common channel may be part of the extraction hood 200.

The inlet 204 of the receiving hood section 202 may protrude beyond the one or more capture hood inlets 208 of the capture hood section 206, such that the receiving hood section 202 extends through and out of the capture hood section 208. That is to say that receiving hood inlet 204 protrudes beyond the one or more capture hood inlets 208. In other words, if the receiving hood inlet 204 were to be aimed at a source of particulates, then the receiving hood inlet 204 would be closer to the source compared with the capture hood inlet(s) 208.

The receiving hood section 202 may comprise a continuous receiving hood wall 210 that defines the receiving hood inlet 204. The receiving hood wall 210 may be formed of one or more pieces that are attached together to form a continuous wall or alternatively be formed of a single piece.

The receiving hood wall 210 may also act as an inner boundary for the one or more capture hood inlet(s) 208. The capture hood section 206 may comprise a capture hood wall 212 located at least partly around a periphery of the receiving hood section (or receiving hood wall) 202. In this case, the one or more capture hood inlets 208 are defined between the receiving hood wall 210 and the capture hood wall 212. In other words, the capture hood 206 section may substantially surround the receiving hood section 202.

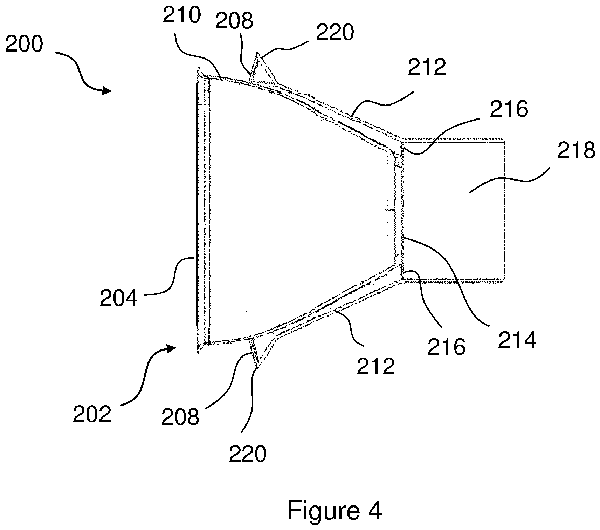

As shown in Figure 4, the receiving hood wall 210 may taper inwards from the inlet 204. In other words, the largest cross-sectional area of the receiving section (when looking in the plane shown by Figure 3), is at the inlet 204 of the receiving hood section 202. The cross-sectional area of the receiving hood section 202 may then steadily reduce until a certain point. The capture hood wall 212 may also taper inwards from the inlet 208. As shown in figure 4, the taper rate of the capture hood wall 212 may be substantially similar to the taper rate of the receiving hood wall 210. That is to say that the gap between the receiving hood wall 210 and the capture hood wall 212 may be substantially uniform along the length of the taper of the receiving hood wall 210 and the capture hood wall 212.

In one example, the receiving hood wall 210 may taper inwards from the inlet 204 to an outlet 214 of the receiving hood wall 210. The capture hood wall 212 may taper inwards from the inlet 208 to an outlet 216 of the capture hood section 206. The outlet 214 of the receiving hood section 202 and the outlet of the capture hood section 206 may feed into a common channel 218, such as an extraction hose.

The outlet area of the receiving hood section 202 may be smaller than the inlet 204 area of the receiving hood section 202. As described above, this is achieved by providing a converging taper of the receiving hood wall 210.

In one example, the outlet area 216 of the capture hood section 206 is substantially similar to the total inlet area 208 of the capture hood section 206. As described above, this is achieved as the taper of the receiving hood wall 210 may substantially match the taper of the capture hood wall 212.

Although not shown in figure 4, there may be intake apparatus, such as a fan or pump (or other suitable equipment) for drawing air into the extraction hood 200. The intake apparatus may be located in the common channel 218 such that air is drawn in through both the receiving hood inlet 204 and the capture hood inlet(s) 208. In other examples, the receiving hood section 202 and the capture hood section 206 each have separate intake apparatus.

In one example, as shown in Figure 3, the receiving hood inlet 204 has a substantially square profile. That is to say that the receiving hood wall 210 may have a substantially square profile at the inlet. In some examples, the receiving hood inlet 204 has rounded corners.

The capture hood wall 212 may have a substantially circular profile (as shown in Figure 3). In some examples, the capture hood wall 212 may be interrupted by the receiving hood wall 210. That is to say that the capture hood wall 212 might not extend all the way around the receiving hood wall 210, but rather have a plurality of sections around the receiving hood wall 210. For example, as shown in Figure 3, the capture hood wall 212 may define four inlets 208, each having a minor segment shape.

As shown in figure 4, the capture hood wall 212 may have a lip 220. The lip 220 is effectively a section where the gradient of the capture hood wall 212 changes to have an increased inlet area. In some examples, the receiving hood wall 210 comprises a similar lip too.

In some examples, the capture hood wall 212 may be movable such that the total inlet area of the capture hood section 206 may be varied, in use. For example, the capture hood wall 212 may include one or more controllable pivotable flaps or the like to alter the inlet area of the capture hood section 202 in use. For example, a user may wish to reduce the size of the capture hood inlet area 208 and so control the pivotable flaps to reduce the intake area of the capture hood section 206. That is to say that the position of at least part of the capture hood wall 212 (at the inlet region) may be adjusted relative to the receiving hood wall 210 to modify the relative area of the capture hood inlet(s) 208 to the area of the receiving hood inlet 204.

The material of the extraction hood 200 may be designed to suit the activity and environment. For example, in some environments, plastic composites and/or metals are suitable. Additives may be used to make them fire retardant and/or anti-static. Extraction hoods 200 used in hotwork environments are substantially formed of metal. In one example, the ratio of receiving hood inlet area to the total area of the one or more capture hood inlets is between 3:1 and 10:1. More preferably, the ratio is between 5:1 and 8:1, more preferably the ratio is between 6:1 and 7:1. The ratio described above provides a suitable arrangement such that the airspeed into the receiving hood section is different to the airspeed into the capture hood section. In one example, the ratio of receiving hood outlet area to the total area of the one or more capture hood outlets is between 1:1 and 2:1.

The capture shood section 206 could be considered to be a bypass section. That is to say that it has a separate inlet compared with the receiving hood section 202, but may feed into the same common channel as the receiving hood section 202.

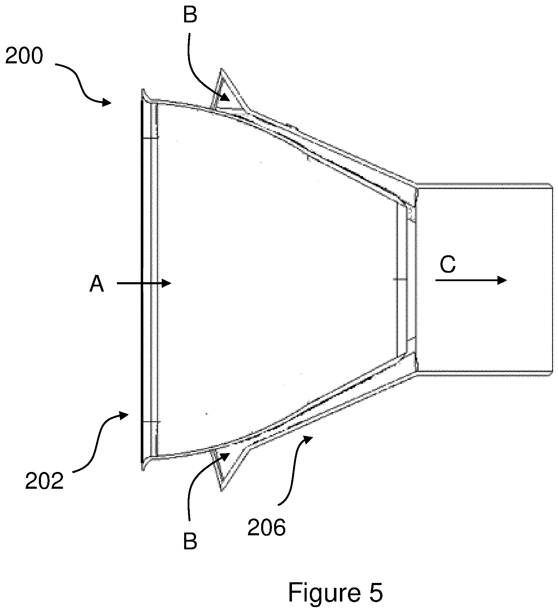

Figure 5 shows an example of airflow into the extraction hood 200. Arrow A indicated airflow into the receiving hood section. Arrows B indicate airflow into the capture hood section 206. Arrow C indicates airflow in the common channel of the extraction hood 200. In use, air would flow into the receiving hood inlet 204 at a relatively lower velocity than into the capture hood inlet 208 because the area of the receiving hood inlet 204 is greater than the area of the capture hood inlet(s) 208. In one example, the inlet velocity of air into the receiving hood inlet 204 (e.g., along arrow A) is between 2-3m/s. Air flowing into the capture hood section 206 may be between 4-6m/s. In other words, due to the difference in inlet area between the receiving hood section 202 and capture hood section 206, the airflow into the capture hood section 206 is faster compared with the airflow into the receiving hood section 202. This makes the capture hood section 206 more effective at receiving residual airborne particulates compared with the receiving hood section 202.

As the receiving hood section 202 tapers, the airflow increases. As the airflow reaches the common channel, as indicated by arrow C, then it is approximately 4-6m/s. In other words, the speed of the airflow within the common channel may be substantially similar to the speed of the airflow into the capture hood inlet 208. The speed of the airflow within the common channel may be greater than the airflow into the receiving hood inlet 204. Airflow is dependent on air pump/fan performance characteristics and the velocity of airflow in the common channel to which the receiving hood section 202 and the capture hood section 206 are connected.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An extraction hood for aiding ventilation, the extraction hood comprising:
a receiving hood section defining a receiving hood inlet for receiving one or more particulates that are directed towards the receiving hood section; and
a capture hood section defining one or more capture hood inlets for receiving residual airborne particulates,
wherein a receiving hood inlet area is larger compared with a total area of the one or more capture hood inlets.

2. The extraction hood according to claim 1, wherein the receiving hood section extends through capture hood section.

3. The extraction hood according to claim 2, wherein the receiving hood inlet protrudes beyond the one or more capture hood inlets, such that the receiving hood section extends through and out of the capture hood section.

4. The extraction hood according to claims 1, 2 or 3, wherein the receiving hood section comprises a continuous receiving hood wall that defines the receiving hood inlet.

5. The extraction hood according to claim 4, wherein the receiving hood inlet has a substantially square profile.

6. The extraction hood according to claims 4 or 5, wherein the capture hood section comprises a capture hood wall located at least partly around a periphery of the receiving hood section, wherein the one or more capture hood inlets are defined between the receiving hood wall and the capture hood wall.

7. The extraction hood according to claim 6, wherein the capture hood wall has a lip at the one or more capture hood inlets to increase the total area of the one or more capture hood inlets.

8. The extraction hood according to any one of claims 6 or 7, wherein the total inlet area of the one or more capture hood inlets may be varied by adjusting a position of the capture hood wall relative to the position of the receiving hood wall.

9. The extraction hood according to any one of the preceding claims, wherein the capture hood section has a substantially circular profile.

10. The extraction hood according to any one of the preceding claims, wherein one or more capture hood inlets comprises a plurality of capture hood inlets arranged around a periphery of the receiving hood section.

11. The extraction hood according to any one of the preceding claims, wherein the capture hood section and the receiving hood section each have outlets that feed into a common channel.

12. The extraction hood according to claim 11, wherein an outlet area of the receiving hood section is smaller than the inlet area of the receiving hood section.

13. The extraction hood of either claim 11 or 12, wherein the outlet area of the capture hood section is substantially similar to the total inlet area of the capture hood section.

14. The extraction hood according to any one of the preceding claims, where the extraction hood is substantially formed of metal.

15. The extraction hood according to any one of the preceding claims, wherein the ratio of receiving hood inlet area to the total area of the one or more capture hood inlets is between 3:1 and 10:1.
